(19) Europäisches Patentamt
European Patent Office
Office européen des brevets

(11) **EP 3 968 204 A1**

(12) **EUROPEAN PATENT APPLICATION**

(43) Date of publication:
**16.03.2022 Bulletin 2022/11**

(21) Application number: **21195597.6**

(22) Date of filing: **08.09.2021**

(51) International Patent Classification (IPC):
**G06F 30/23** $^{(2020.01)}$     **G06F 30/10** $^{(2020.01)}$
**G06F 111/10** $^{(2020.01)}$     **G06F 119/14** $^{(2020.01)}$

(52) Cooperative Patent Classification (CPC):
**G06F 30/23; G06F 30/10;** G06F 2111/10;
G06F 2119/14

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2020 US 202063077332 P
17.11.2020 US 202016950669**

(71) Applicant: **Autodesk, Inc.
San Rafael, CA 94903 (US)**

(72) Inventors:
• **EBRAHIMI, Mehran**
  **San Rafael (US)**
• **BUTSCHER, Adrian**
  **San Rafael (US)**
• **CHEONG, Hyunmin**
  **San Rafael (US)**

(74) Representative: **D Young & Co LLP
120 Holborn
London EC1N 2DY (GB)**

(54) **TECHNIQUES FOR DESIGNING STRUCTURES USING TORSION-DEFORMABLE SPATIAL BEAM ELEMENTS**

(57) Techniques are disclosed for designing structures using a torsion-deformable spatial beam element. The beam element can be represented using the absolute nodal coordinate formulation, or any other technically feasible formulation. At each of one or more time steps, the Bishop frame is used to generate local coordinate systems along a center line of the beam element, which are used to compute a potential energy of the beam element (704). Thereafter, a derivative of the potential energy (708) is plugged into equations of motion that are solved to determine an updated state of the beam element (710). A representation of the updated beam element can also be rendered and displayed via a graphical user interface (712).

FIG. 7

Printed by Jouve, 75001 PARIS (FR)

**Description**

**CROSS-REFERENCE TO RELATED APPLICATIONS**

This application claims the priority benefit of the United States Provisional Patent Application having Serial Number 63/077,332 (Attorney Docket Number AUTO/1484USL) and filed on September 11, 2020.

**BACKGROUND**

**Field of the Disclosure**

Embodiments of the present disclosure relate generally to computer science and computer-aided design and, more specifically, to techniques for designing structures using torsion-deformable spatial elements.

**Description of the Related Art**

Computer-aided design, among other things, utilizes computers to aid in the creation, modification, analysis, and/or optimization of engineering structure designs. Oftentimes, computer-aided design (CAD) applications include simulation engines for simulating the behaviors of designs under various real-world conditions.

Beam elements are commonly found in the designs of architectural structures, robots, wind turbines, suspension systems, and other industrial structures. Conventional CAD applications simulate systems that include beam elements using one or more Serret-Frenet frames to determine local coordinate systems along the different beam elements. Local coordinate systems are required to perform finite element simulations of bending deformations and cross-sectional torsions experienced by the various beam elements.

One drawback of the above approach is that Serret-Frenet frames are undefined at locations where a given beam element is not curved/bent, such as at turning or saddle points of the beam element. Accordingly, at such locations, Serret-Frenet frames should not be used to determine the local coordinate systems that are required to simulate bending deformations and cross-sectional torsions in the beam element. To the extent Serret-Frenet frames are implemented in simulations where locations of beam elements are not curved, conventional CAD applications cannot accurately simulate the behavior of those particular beam elements.

As the foregoing illustrates, what is needed in the art are more effective techniques for designing systems that include beam elements with locations that are not curved during simulation.

**SUMMARY**

One embodiment of the present disclosure sets forth a computer-implemented method for simulating a system comprising a beam element. The method includes receiving, via a graphical user interface, user input specifying a beam element included in a system. The method also includes determining a potential energy for the system based on a plurality of local coordinate systems that are generated at corresponding points along a center line of the beam element, wherein each local coordinate system included in the plurality of local coordinate systems comprises a Bishop frame. The method further includes performing one or more computer simulation operations based on one or more equations of motion and a derivative of the potential energy to generate an updated system. In addition, the method includes rendering at least one representation of the updated system for display via the graphical user interface.

Other embodiments of the present disclosure include, without limitation, a computer-readable medium including instructions for performing one or more aspects of the disclosed techniques as well as a computing device for performing one or more aspects of the disclosed techniques.

One technical advantage of the disclosed techniques relative to the prior art is that computer-aided design applications can more accurately simulate and render beam elements having locations with zero curvature. In addition, the disclosed techniques require fewer degrees of freedom to represent a beam element relative to various conventional techniques, thereby reducing the overall computational costs of simulation by a computer-aided design application. These technical advantages represent one or more technological advancements over prior art approaches.

**BRIEF DESCRIPTION OF THE DRAWINGS**

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.

Figure 1 is a conceptual illustration of a system configured to implement one or more aspects of the various embodiments;

Figure 2 illustrates an exemplar deformation of a torsion-deformable beam element, according to various embodiments;

Figure 3 illustrates exemplar evolutions of a Serret-Frenet frame and of a Bishop frame along a spatial curve, according to various embodiments;

Figure 4 illustrates exemplar scalar functions for local coordinate frames, according to various embodiments;

Figure 5 illustrates exemplar Bishop and material frames associated with the cross-section of a beam element, according to various embodiments;

Figure 6 illustrates exemplar renderings of a simulated torsion-deformable beam element, according to various embodiments;

Figure 7 is a flow diagram of method steps for simulating a beam element that includes one or more locations that are not curved during simulation, according to various embodiments; and

Figure 8 is a flow diagram of method steps for generating local coordinate frames along a spatial curve while determining a potential energy, according to various embodiments.

## DETAILED DESCRIPTION

In the following description, numerous specific details are set forth to provide a more thorough understanding of the present disclosure. However, it will be apparent to one of skilled in the art that the present disclosure may be practiced without one or more of these specific details.

System Overview

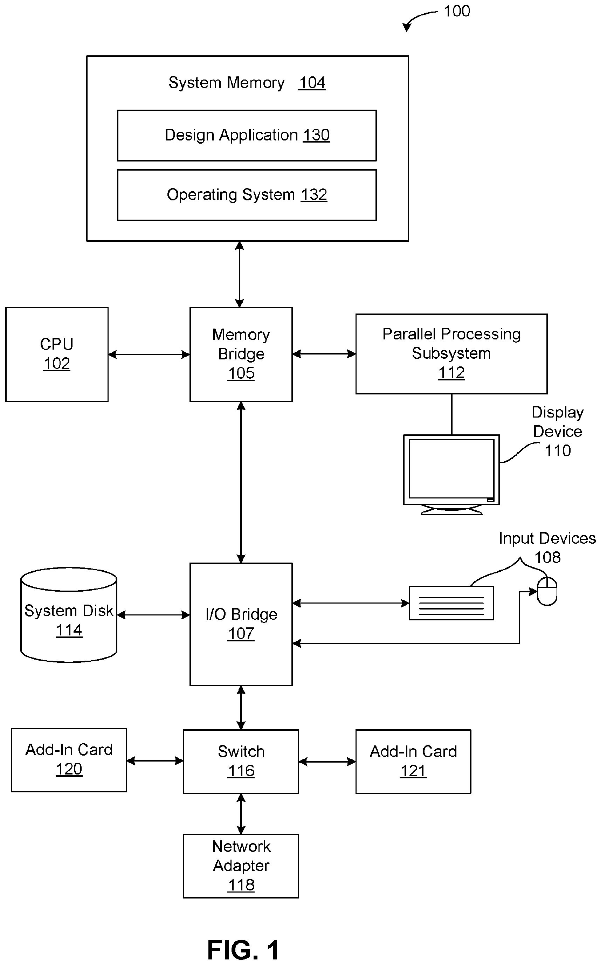

Figure 1 is a conceptual illustration of a system 100 configured to implement one or more aspects of the various embodiments. In various implementations, system 100 may be an augmented reality, virtual reality, or mixed reality system or device, a personal computer, video game console, personal digital assistant, mobile phone, mobile device or any other device suitable for practicing one or more embodiments of the present invention.

As shown, system 100 includes a central processing unit (CPU) 102 and a system memory 104 communicating via a bus path that may include a memory bridge 105. The CPU 102 includes one or more processing cores, and, in operation, the CPU 102 is the master processor of the system 100, controlling and coordinating operations of other system components. The system memory 104 stores software applications and data for use by the CPU 102. The CPU 102 runs software applications and optionally an operating system. As shown, the system memory 104 stores a computer-aided design application 130 (also referred to herein as "design application 130") and an operating system 132 on which the design application 130 runs. The operating system 132 may be, e.g., Linux® or Microsoft Windows®. The design application 130 is configured to receive a user selection of system including one or more beam elements as input and perform a simulation of the system including the beam element. During the simulation, the design application 130 generates local coordinate systems that are Bishop frames along curve(s) of the beam element(s) in order to simulate torsion and bending deformations, as described in greater detail below.

The memory bridge 105, which may be, e.g., a Northbridge chip, is connected via a bus or other communication path (e.g., a HyperTransport link) to an I/O (input/output) bridge 107. The I/O bridge 107, which may be, e.g., a Southbridge chip, receives user input from one or more user input devices 108 (e.g., keyboard, mouse, joystick, digitizer tablets, touch pads, touch screens, still or video cameras, motion sensors, and/or microphones) and forwards the input to the CPU 102 via the memory bridge 105.

A display processor 112 is coupled to the memory bridge 105 via a bus or other communication path (e.g., a PCI Express, Accelerated Graphics Port, or HyperTransport link); in one embodiment the display processor 112 is a graphics subsystem that includes at least one graphics processing unit (GPU) and graphics memory. Graphics memory includes a display memory (e.g., a frame buffer) used for storing pixel data for each pixel of an output image. Graphics memory can be integrated in the same device as the GPU, connected as a separate device with the GPU, and/or implemented within system memory 104.

The display processor 112 periodically delivers pixels to a display device 110 (e.g., a screen or conventional CRT, plasma, OLED, SED or LCD based monitor or television). Additionally, the display processor 112 may output pixels to film recorders adapted to reproduce computer generated images on photographic film. The display processor 112 can provide the display device 110 with an analog or digital signal. In various embodiments, one or more of the various graphical user interfaces set forth in Appendices A-J, attached hereto, are displayed to one or more users via display device 110, and the one or more users can input data into and receive visual output from those various graphical user interfaces.

A system disk 114 is also connected to the I/O bridge 107 and may be configured to store content and applications and data for use by the CPU 102 and the display processor 112. The system disk 114 provides non-volatile storage for applications and data and may include fixed or removable hard disk drives, flash memory devices, and CD-ROM, DVD-ROM, Blu-ray, HD-DVD, or other magnetic, optical, or solid state storage devices.

A switch 116 provides connections between the I/O bridge 107 and other components such as a network adapter 118 and various add-in cards 120 and 121. The network adapter 118 allows system 100 to communicate with other systems via an electronic communications network, and may include wired or wireless communication over local area networks and wide area networks such as the Internet.

Other components (not shown), including USB or other port connections, film recording devices, and the like, may also be connected to the I/O bridge 107. For example, an audio processor may be used to generate analog or digital audio output from instructions and/or data provided by the CPU 102, the system memory 104, or the system disk 114. Communication paths interconnecting the various components in Figure 1 may be implemented using any suitable protocols, such as PCI (Peripheral Component Interconnect), PCI Express (PCI-E), AGP (Accelerated Graphics Port), HyperTransport, or any other bus or point-to-point communication protocol(s), and connections between different devices may use different protocols, as is known in the art.

In one embodiment, the display processor 112 incorporates circuitry optimized for graphics and video processing, including, for example, video output circuitry, and constitutes a graphics processing unit (GPU). In another embodiment, the display processor 112 incorporates circuitry optimized for general purpose processing. In yet another embodiment, the display processor 112 may be integrated with one or more other system elements, such as the memory bridge 105, the CPU 102, and the I/O bridge 107 to form a system on chip (SoC). In still further embodiments, display processor 112 is omitted and software executed by the CPU 102 performs the functions of the display processor 112.

Pixel data can be provided to the display processor 112 directly from the CPU 102. In some embodiments of the present invention, instructions and/or data representing a scene are provided to a render farm or a set of server computers, each similar to the system 100, via the network adapter 118 or the system disk 114. The render farm generates one or more rendered images of the scene using the provided instructions and/or data. These rendered images may be stored on computer-readable media in a digital format and optionally returned to the system 100 for display. Similarly, stereo image pairs processed by the display processor 112 may be output to other systems for display, stored in the system disk 114, or stored on computer-readable media in a digital format.

Alternatively, the CPU 102 provides the display processor 112 with data and/or instructions defining the desired output images, from which the display processor 112 generates the pixel data of one or more output images, including characterizing and/or adjusting the offset between stereo image pairs. The data and/or instructions defining the desired output images can be stored in the system memory 104 or graphics memory within the display processor 112. In an embodiment, the display processor 112 includes 3D rendering capabilities for generating pixel data for output images from instructions and data defining the geometry, lighting shading, texturing, motion, and/or camera parameters for a scene. The display processor 112 can further include one or more programmable execution units capable of executing shader programs, tone mapping programs, and the like.

Further, in other embodiments, the CPU 102 or the display processor 112 may be replaced with or supplemented by any technically feasible form of processing device configured process data and execute program code. Such a processing device could be, for example, a central processing unit (CPU), a graphics processing unit (GPU), an application-specific integrated circuit (ASIC), a field-programmable gate array (FPGA), and so forth. In various embodiments any of the operations and/or functions described herein can be performed by the CPU 102, the display processor 112, or one or more other processing devices or any combination of these different processors.

The CPU 102, render farm, and/or the display processor 112 can employ any surface or volume rendering technique known in the art to create one or more rendered images from the provided data and instructions, including rasterization, scanline rendering REYES or micropolygon rendering, ray casting, ray tracing, image-based rendering techniques, and/or combinations of these and any other rendering or image processing techniques known in the art.

In other contemplated embodiments, the system 100 may be a robot or robotic device and may include the CPU 102 and/or other processing units or devices and the system memory 104. In such embodiments, the system 100 may or may not include other elements shown in Figure 1. The system memory 104 and/or other memory units or devices in the system 100 may include instructions that, when executed, cause the robot or robotic device represented by the system 100 to perform one or more operations, steps, tasks, or the like.

It will be appreciated that the system shown herein is illustrative and that variations and modifications are possible. The connection topology, including the number and arrangement of bridges, may be modified as desired. For instance, in some embodiments, the system memory 104 is connected to the CPU 102 directly rather than through a bridge, and other devices communicate with the system memory 104 via the memory bridge 105 and the CPU 102. In other alternative topologies the display processor 112 is connected to the I/O bridge 107 or directly to the CPU 102, rather than to the memory bridge 105. In still other embodiments, the I/O bridge 107 and the memory bridge 105 might be integrated into a single chip. The particular components shown herein are optional; for instance, any number of add-in cards or peripheral devices might be supported. In some embodiments, the switch 116 is eliminated, and the network adapter 118 and add-in cards 120, 121 connect directly to the I/O bridge 107.

**Simulating a Torsion-Deformable Beam Element**

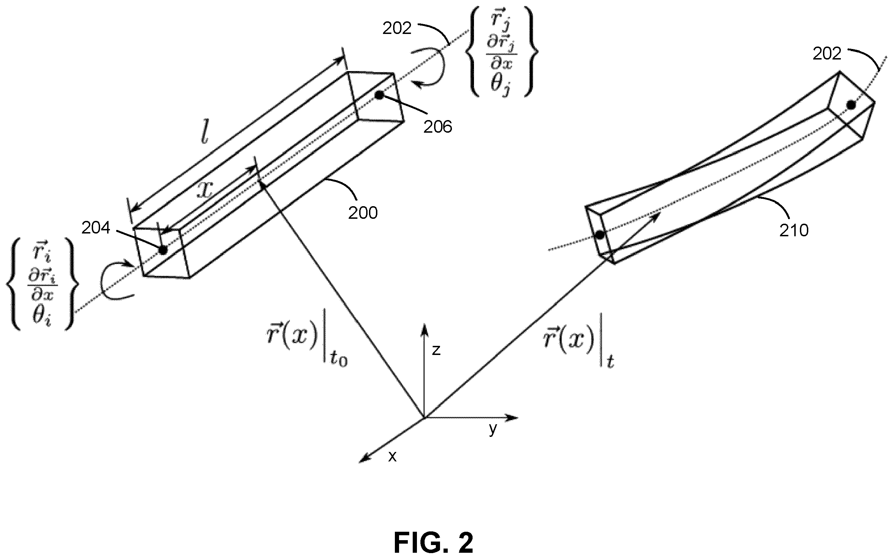

Figure 2 illustrates an exemplar deformation of a torsion-deformable beam element 200, according to various embodiments. As shown, the beam element 200 is represented by nodes 204 and 206 along a center line 202 on opposing sides of the beam element 200. Although two nodes 204 and 206 are shown for illustrative purposes, any technically feasible number of nodes may be used in embodiments. The center line 202 is a curve, denoted by $\vec{r}(x)$, that passes through a center of the beam element 200.

In some embodiments, the design application 130 receives, as input, a user specification of the beam element 200 in a system. For example, the system could represent an architectural structure, a robot, a wind turbine, or a suspension system that includes one or more beam elements and joints between the beam element(s). The design application 130 includes a simulation engine that simulates the system including the beam element 200 by, during one or multiple steps of the simulation, (1) computing a potential energy for the beam element 200 using local coordinate frames that are Bishop frames generated at various points along the center line curve 202, and (2) solving equations of motion using a derivative of the potential energy with respect to state variables of the beam element 200 to obtain an updated state of the beam element 200, as described in greater detail below. In such cases, the local coordinate frames that are Bishop frames can be used to measure torsion and bending deformations during the simulation.

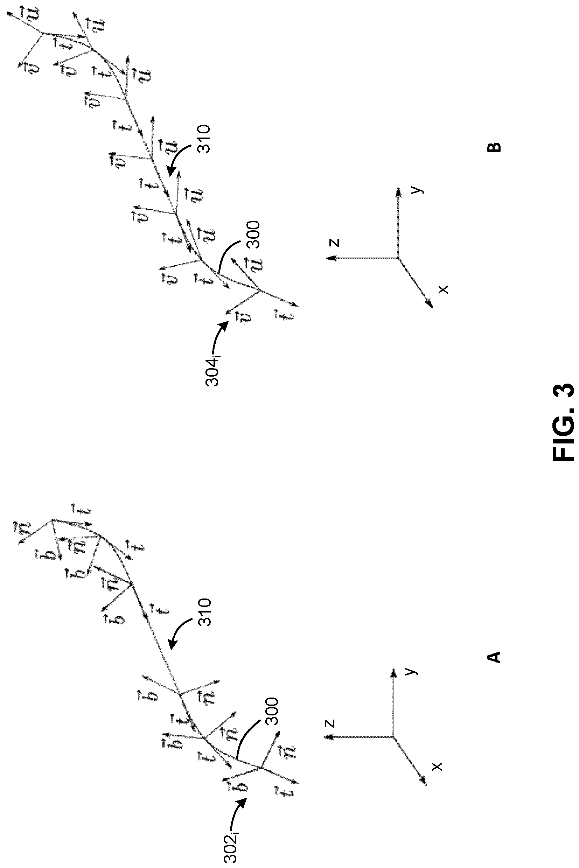

Figure 3 illustrates exemplar evolutions of a Serret-Frenet frame and of a Bishop frame along a spatial curve 300, according to various embodiments. The curve 300 represents the center line of a beam element. As shown in panel A, and the curve 300 includes a straight segment 310 where the curve 300 is not curved/bent. However, the Serret-Frenet frame $302_i$ is undefined at locations where the center line of a beam element is not curved (also referred to herein as "zero-curvature points"), such as points along straight segments of a curve and points at turning or saddle points of a curve. Illustratively, local coordinate systems $302_i$ (referred to herein individually as a local coordinate system 302 and collectively as local coordinate systems 302) that are Serret-Frenet frames cannot be computed at zero-curvature points along the straight segment 310 of the curve 300. Accordingly, torsion and bending deformations of a beam element cannot be correctly tracked using Serret-Frenet frames when zero-curvature points appear during a simulation.

As shown in panel B, the Bishop frame is defined everywhere along the curve 300. Illustratively, local coordinate systems $304_i$ (referred to herein individually as a local coordinate system 304 and collectively as local coordinate systems 304) that are Bishop frames can be computed at various points along the curve 300, including at zero-curvature points along the straight segment 310 of the curve 300. Because local coordinates systems can be computed even along straight segments and at zero-curvature points, the Bishop frame can be used to more accurately simulate beam elements having straight segments and zero-curvature points during simulation.

In some embodiments, local coordinate frames that are Bishop frames (e.g., the local coordinate systems 304) are also used to reduce the degrees of freedom (DOFs) in an absolute nodal coordinate formulation (ANCF) of a beam element. In such cases, ANCF is used to describe the configuration of finite elements representing the beam element by positions and slopes of nodes (e.g., the nodes 204 and 206 shown in Figure 2), and the Bishop frames are used to describe the kinematics of a cross-section of the beam element. Although described herein primarily with respect to ANCF, other embodiments may apply Bishop frames to any technically feasible formulations, such as the floating frame of reference formulation, the incremental finite element formulation, or the large rotation vector formulation, which will generally have different DOFs than ANCF.

The Bishop frame has a sound mathematical foundation in terms of the equation of the center line of a beam (e.g., center line 202 in Figure 2) and is well-defined at zero-curvature points where the curvature of the beam vanishes, such as points along the straight segment 310 described above in conjunction with Figure 2. As described, using the Bishop frame along with ANCF results in a singularity-free formulation for characterizing the configuration of a beam element, allowing the Bishop frame formulation of ANCF to handle torsional deformations more accurately than conventional formulations. In addition, the Bishop frame formulation of ANCF requires fewer DOFs than other formulations of ANCF, which can reduce computational costs. In particular, in the Bishop frame formulation of ANCF, global nodal coordinates and slopes of those nodes can be used to define the center line of a beam element, while cross-sectional torsion is determined by a rotation angle about the beam center line. In such cases, the beam element follows Euler-Bernoulli beam theory and has 7 DOFs per node. A beam element having two nodes, such as the beam element 200 described above in conjunction with Figure 2, would have a total of 14 DOFs, and such a beam element is also referred to herein as "ANCF14."

More formally, according to AFCF theory, the properties of a beam center line fully determine the longitudinal deformation of the beam. However, a local coordinate system and its evolution between the two ends of a beam are needed to properly simulate elastic deformations, including transverse deformations (bending) and cross-sectional torsion. For a spatially parameterized curve such as $\vec{r}(x)$, infinitely many adapted Cartesian coordinate systems can be defined as the local coordinate system. Let the tangent, normal, and bi-normal axes of a local coordinate system be represented, respectively, by $\vec{t}(x)$, $\vec{n}(x)$, and $\vec{b}(x)$. Then, because of the orthonormality of these axes, there exist scalar functions $\kappa_1(x)$, $\kappa_2(x)$, and $\tau(x)$ such that

$$\vec{t}'(x) = \kappa_1(x)\vec{n}(x) + \kappa_2(x)\vec{b}(x)$$

$$\vec{n}'(x) = -\kappa_1(x)\vec{t}(x) + \tau(x)\vec{b}(x) \tag{1}$$

$$\vec{b}'(x) = -\kappa_2(x)\vec{t}(x) - \tau(x)\vec{n}(x),$$

where the prime denotes differentiation with respect to x and

$$\kappa_1(x) = \vec{t}'(x) \cdot \vec{n}(x), \quad \kappa_2(x) = \vec{t}'(x) \cdot \vec{b}(x), \quad \tau(x) = \vec{n}'(x) \cdot \vec{b}(x). \tag{2}$$

Equation (1) can be rewritten in compact form as

$$\vec{t}'(x) = \vec{\Omega}(x) \times \vec{t}(x)$$

$$\vec{n}'(x) = \vec{\Omega}(x) \times \vec{n}(x) \tag{3}$$

$$\vec{b}'(x) = \vec{\Omega}(x) \times \vec{b}(x),$$

where $\vec{\Omega}(x)$ is the Darboux vector of the frame, given by

$$\vec{\Omega}(x) = \tau(x)\vec{t}(x) - \kappa_2(x)\vec{n}(x) + \kappa_1(x)\vec{b}(x). \tag{4}$$

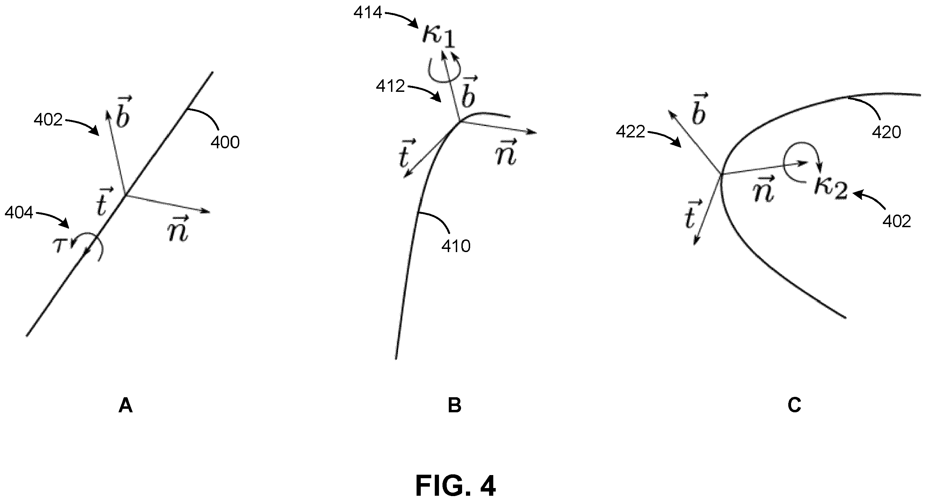

Figure 4 illustrates exemplar scalar functions for local coordinate frames, according to various embodiments. As shown in panel A, for a local coordinate system 204 at a point along a curve 400 having tangent, normal, and bi-normal axes denoted by $\vec{t}(x)$, $\vec{n}(x)$, and $\vec{b}(x)$, respectively, the scalar function $\tau(x)$ in equation (1) defines a rate of rotation of the frame about the $\vec{t}(x)$ axis. In particular, the scalar function $\tau(x)$ indicates a twist (i.e., torsion) of the local coordinate frame about the tangent vector.

As shown in panel B, the scalar function $\vec{\kappa_1}(x)$ in equation (1) describes a rate of rotation of the frame about the $\vec{b}(x)$ axis of a local coordinate frame 412 at a point along a curve 410. In particular, the scalar function $\kappa_1(x)$ represents a curvature of the curve 410.

As shown in panel C, the scalar function $\kappa_2(x)$ in equation (1) describes a rate of rotation of the frame about the $\vec{n}(x)$ axis of a local coordinate frame 422 at a point along a curve 420. In particular, the scalar function $\kappa_2(x)$ represents a curvature of the curve 420.

The system of differential equations in equation (3) describes the evolution of a local coordinate frame along a curve. Depending on the conditions (i.e., constraints) imposed on the local coordinate system, different local coordinate systems can be generated for the curve. Conventionally, the Serret-Frenet frame was used for local coordinate frames, because the Serret-Frenet frame can be computed analytically through equation (1) using only the curvature equation.

However, for a 3D parameterized curve such as a beam center line, the Serret-Frenet frame behaves unpredictably at inflection points where the curve is not curved and the second derivative of the curve is zero. In addition, the Darboux vector of the Serret-Frenet frame contains a component along the tangential direction, causing a local coordinate system to twist when transported along a curve according to such a Darboux vector. By contrast, the Bishop frame is well-defined even for zero-curvature points on a curve where the second derivative of the curve is zero, and the Bishop frame allows a frame to be moved with a uniform zero twist along a curve, leading to a more geometrically natural evolution of the local coordinate frame.

More formally, let t(x), *u(x),* and *v(x)* correspond to the three axes of a Bishop frame at point *x*. By definition, in the Bishop frame $\tau(x) = 0$, resulting in the following differential equations for the Bishop frame coordinate system:

$$\vec{t}'(x) = \kappa_1(x)\vec{u}(x) + \kappa_2(x)\vec{v}(x)$$

$$\vec{u}'(x) = -\kappa_1(x)\vec{t}(x) \tag{5}$$

$$\vec{v}'(x) = -\kappa_2(x)\vec{t}(x).$$

Equation (5) can be further shortened to

$$\vec{t}'(x) = \vec{\Omega}_{\text{Bishop}}(x) \times \vec{t}(x)$$

$$\vec{u}'(x) = \vec{\Omega}_{\text{Bishop}}(x) \times \vec{u}(x) \tag{6}$$

$$\vec{v}'(x) = \vec{\Omega}_{\text{Bishop}}(x) \times \vec{v}(x).$$

The Darboux vector of the Bishop frame can then be expressed as

$$\vec{\Omega}_{\text{Bishop}}(x) = \kappa_1(x)\vec{v}(x) - \kappa_2(x)\vec{u}(x) \tag{7}$$

The Darboux vector of equation (7) has no tangential component and moves the Bishop frame along a curve with no twist. The vector $\vec{t}(x)$ of the Bishop and the Serret-Frenet frames are the same and can be computed analytically using

$$\vec{t}(x) = \frac{\vec{r}'(x)}{\|\vec{r}'(x)\|}$$

$$\vec{b}(x) = \frac{\vec{r}'(x) \times \vec{r}''(x)}{\|\vec{r}'(x) \times \vec{r}''(x)\|} \tag{8}$$

$$\vec{n}(x) = \vec{b}(x) \times \vec{t}(x).$$

The differential equations of equation (5) cannot be numerically solved to obtain $\vec{u}(x)$ and $\vec{v}(x)$ that represent the axes of a local coordinate frame that is a Bishop frame. Instead, embodiments can use any technically feasible approximation techniques, such as the rotation method, the double reflection method, or the numerical integration method, to solve equation (5). In some embodiments, the design application 130 solves equation (5) to generate local coordinate frames at a number of points along a curve using Algorithm 1, which finds a unique solution to equation (5), subject to initial conditions at an initial location $x = 0$, in order to generate a local Cartesian coordinate system $\{\vec{t}^0, \vec{u}^0, \vec{v}^0\}$ at $x = 0$, and then generates the Bishop frame at a further $N$ desired locations along the curve. It should be understood that better approximations of the local Bishop frame can be obtained by using more locations along the curve. Having the Bishop frame at only some points, such as integration points (e.g., Gaussian quadrature points), is adequate for some simulations because, when solving the dynamic equations of beam elements, the physical quantities of interest are integrated numerically along the center line of the beam element.

**Output**: Bishop frame $\{\vec{t}^i, \vec{u}^i, \vec{v}^i\}$ for $i = 1, \dots, N$

**for** $i = 1, \dots, N$ **do**

$\vec{t}^i \leftarrow \vec{r}'(x_i)/\|\vec{r}'(x_i)\|$;

$\vec{n} \leftarrow \vec{t}^{i-1} \times \vec{t}^i$;

**if** $\|\vec{n}\| = 0$ **then**

$\vec{u}^i \leftarrow \vec{u}^{i-1}$;

$\vec{v}^i \leftarrow \vec{v}^{i-1}$;

**else**

$\vec{n} \leftarrow \vec{n}/\|\vec{n}\|$;

$\phi \leftarrow \arccos(\vec{t}^{i-1} \cdot \vec{t}^i)$;

Rotate both $\vec{u}^{i-1}$ and $\vec{v}^{i-1}$ about $\vec{n}$ by angle $\phi$ to get $\vec{u}^i$ and $\vec{v}^i$;

**end**

**end**

**[0050]**  To accou

the cross-section c

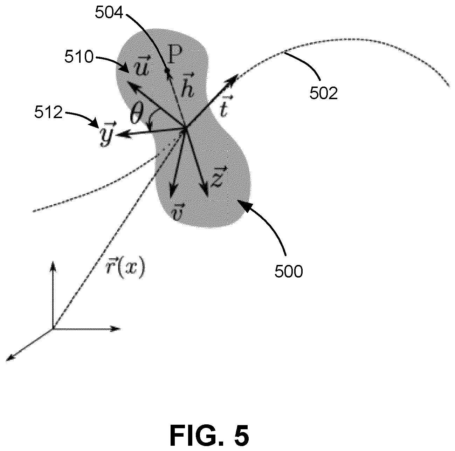

To account for cross-sectional torsion, a consistent way of tracking rotation of the cross-section of a beam element across the beam center line is required. In some embodiments, the rotation of the cross-section of the beam element is tracked by leveraging the Bishop frame. Figure 5 illustrates exemplar Bishop and material frames associated with the cross-section of a beam element, according to various embodiments. As shown, a beam element has a cross section 500 and center line 502. At each point x, assume a coordinate system 512, referred to herein as the "material frame," is rigidly attached to the cross section 500 and rotates along with the cross-section about the center line 502. In some embodiments, the material frame 512 is determined by rotating a Bishop frame based on torsion. Let $\theta(x)$ denote the rotation of the material frame 512 relative to a Bishop frame 510 at point x. Then the material frame 512 includes an axis coincident with axis $\vec{t}(x)$ of the Bishop frame 510 and two orthonormal vectors $\vec{y}(x)$ and $\vec{x}(x)$ perpendicular to $\vec{t}(x)$. Using the Bishop frame 510 at x, the vectors $\vec{y}(x)$ and $\vec{x}(x)$ can be computed as

$$\vec{y}(x) = \cos\big(\theta(x)\big)\vec{u}(x) + \sin\big(\theta(x)\big)\vec{v}(x)$$

$$\vec{z}(x) = -\sin\big(\theta(x)\big)\vec{u}(x) + \cos\big(\theta(x)\big)\vec{v}(x). \tag{9}$$

Further, the equations for evolving the material frame 512 along the center line 502 can be written as

$$\vec{t}'(x) = \vec{\Omega}_{\mathrm{m}}(x) \times \vec{t}(x)$$

$$\vec{y}'(x) = \vec{\Omega}_{\mathrm{m}}(x) \times \vec{y}(x) \tag{10}$$

$$\vec{z}'(x) = \vec{\Omega}_{\mathrm{m}}(x) \times \vec{z}(x),$$

where $\vec{\Omega}_{\mathrm{m}}$ is the Darboux vector of the coordinate system

$$\vec{\Omega}_{\mathrm{m}}(x) = (\vec{y}'(x) \cdot \vec{z}(x))\vec{t}(x) - \left(\vec{t}'(x) \cdot \vec{z}(x)\right)\vec{y}(x) + \left(\vec{t}'(x) \cdot \vec{y}(x)\right)\vec{z}(x)$$

$$= \tau_m(x)\vec{t}(x) - \gamma_2(x)\vec{y}(x) + \gamma_1(x)\vec{z}(x), \tag{11}$$

where $\gamma_1$ and $\gamma_2$ are curvatures of a material frame and $\tau_m$ is a rotation of the material frame about $\vec{t}$. Considering $\vec{v}'(x) \cdot \vec{u}(x) = \vec{u}'(x) \cdot \vec{v}(x) = 0$, $\tau_m$ can be expressed as

$$\tau_m = \vec{y}'(x) \cdot \vec{z}(x) = \theta'(x). \tag{12}$$

Accordingly, $\theta(x)$ describes both the cross-sectional rotation (i.e., mechanical torsion) and the twist of the coordinate system (i.e., geometrical torsion). $\theta(x)$ can be taken as a nodal degree of freedom for the ANCF14 beam element, leading to the following time-dependent vector of nodal coordinates for the ANCF14 beam element:

$$\vec{q}(t) := \begin{bmatrix} \vec{r}_i^{\mathrm{T}} & \partial \vec{r}_i^{\mathrm{T}}/\partial x & \theta_i & \vec{r}_i^{\mathrm{T}} & \partial \vec{r}_i^{\mathrm{T}}/\partial x & \theta_j \end{bmatrix}^{\mathrm{T}} \tag{13}$$

where $i$ and $j$ are the two nodes of the beam element and $\vec{r}$, $\dfrac{\partial \vec{r}}{\partial x}$, and $\theta$ represent the global coordinates, global slopes, and cross-sectional rotation about the center at those nodes, respectively.

As shown in Figure 5, if the position of a point 504, P, that is on the cross-section in the material frame 512 is denoted by $\vec{h}(t) := [0 \ \overline{y} \ \overline{z}]^{\mathrm{T}}$, then the global position of the point $\vec{r}_{\mathrm{p}}(x)$ can be calculated as

$$\vec{r}_{\mathrm{p}}(x, t) = \vec{r}(x, t) + \mathbf{R}(x, t)\vec{h} = \mathbf{S}(x)\vec{q}(t) + \mathbf{R}(x, t)\vec{h}, \tag{14}$$

where $\mathbf{R} := [\vec{t} \ \vec{y} \ \vec{z}]$ represents the material frame 512 and S is the time-independent shape function matrix

$$\mathbf{S}(x) = \begin{bmatrix} s_1 \mathbf{I}_3 & s_2 \mathbf{I}_3 & \vec{0}_3 & s_4 \mathbf{I}_3 & s_5 \mathbf{I}_3 & \vec{0}_3 \end{bmatrix}$$

$$s_1 = 1 - 3\left(\frac{x}{l}\right)^2 + 2\left(\frac{x}{l}\right)^3, \ s_2 = l\left(\left(\frac{x}{l}\right) - 2\left(\frac{x}{l}\right)^2 + \left(\frac{x}{l}\right)^3\right) \tag{15}$$

$$s_3 = 3\left(\frac{x}{l}\right)^2 + 2\left(\frac{x}{l}\right)^3, \ s_4 = l\left(\left(\frac{x}{l}\right)^3 - \left(\frac{x}{l}\right)^2\right),$$

where $\vec{0}_3 := [0\ 0\ 0]^T$. In equation (15), $l$ is the length of the ANCF beam element in an undeformation configuration, and $x$ is measured from Node $i$ in the undeformed configuration. The rotation angle $\theta(x)$ can be interpolated linearly from Node $i$ to Node $j$:

$$\theta(x,t) = \left(1 - \frac{x}{l}\right)\theta_i + \frac{x}{l}\theta_j = \bar{\mathbf{S}}(x)\vec{q}(t), \tag{16}$$

leading to the following time-dependent shape function matrix for the cross-sectional rotation:

$$\bar{\mathbf{S}}(x) = [0\ \ 0\ \ 0\ \ 0\ \ 0\ \ 0\ \ 1-\tfrac{x}{l}\ \ 0\ \ 0\ \ 0\ \ 0\ \ 0\ \ 0\ \ x/l]. \tag{17}$$

Given the local coordinate frames along the center lines of one or more beam elements (e.g.. the beam 200 in Figure 2), a potential energy U of a system including those beam element(s) and joints between the beam elements(s) can be computed and plugged into equations of motion to determine an updated state of the system that includes deformed beam element(s) (e.g.. the deformed beam element 210 in Figure 2). In particular, due to Hamilton's principle, the motion of a dynamic system can be determined by finding the stationary values of the actional integral of the dynamic system. For a conservative constrained multibody system, the continuous action integral for time $t \in [0,\ T]$ is given by

$$S(\vec{q}) = \int_0^T \left(L(\vec{q}, \dot{\vec{q}}) - \vec{\lambda} \cdot \vec{g}(\vec{q})\right) dt, \tag{18}$$

where $L(\vec{q},\ \dot{q})$ is the Lagrangian of the system and $\vec{g}(\vec{q}) \in \mathbb{R}^m$ represents m holonomic constraints (joints) equations between different bodies in the assembly. As used herein, an overdot presents a time derivative. For example, in equation (18), $\vec{q} \in \mathbb{R}^n$ and $\dot{q} \in \mathbb{R}^n$ are the vectors of all degrees of freedom of the system and their time derivatives, respectively. In addition, $\vec{\lambda} \in \mathbb{R}^m$ describes the vector of Lagrange multipliers associated with the m constraints. The Lagrangian function $L$ in equation (18) is a difference between the kinetic energy $T$ and a potential energy $U$ of the system:

$$L(\vec{q}, \dot{\vec{q}}) = T(\dot{\vec{q}}) - U(\vec{q}). \tag{19}$$

The Euler-Lagrange equations governing the motion of multibody systems in space and time can be obtained by taking and setting the variation of equation (18) with respect to $\vec{q}$ equal to zero, and incorporating the constraint equations:

$$\frac{d}{dt}\left(\frac{\partial T}{\partial \dot{\vec{q}}}\right) - \frac{\partial T}{\partial \vec{q}} + \frac{\partial U}{\partial \vec{q}} + \frac{\partial \vec{g}^{\mathrm{T}}}{\partial \vec{q}}\vec{\lambda} = \vec{0}$$

$$\vec{g} = \vec{0}. \tag{20}$$

In equation (20), $\frac{\partial U}{\partial \vec{q}}$ is the virtual work of potential energies. More generally, the kinetic and potential energy terms of equation (20) for an ANCF14 beam element are as follows. For the kinetic energy of the ANCF14 beam element, the velocity vector of a point P on the cross-section in the inertial (global) frame is, from equation (14),

$$\frac{d\vec{r}_{\mathrm{p}}}{dt} = \dot{\vec{r}}_{\mathrm{p}} = \dot{\vec{r}} + \dot{\mathbf{R}}\vec{h}. \tag{21}$$

Using equation (21), the kinetic energy of an ANCF14 beam element can be formulated as

$$T_{\text{ANCF14}} = \frac{1}{2}\int_V \rho\left(\dot{\vec{r}}_{\text{P}}^{\text{T}}\dot{\vec{r}}_{\text{p}}\right)dV = \frac{1}{2}\int_V \rho\left(\dot{\vec{r}}^{\text{T}}\dot{\vec{r}} + 2\dot{\vec{r}}^{\text{T}}\dot{\mathbf{R}}\vec{h} + \left(\dot{\mathbf{R}}\vec{h}\right)^{\text{T}}\left(\dot{\mathbf{R}}\vec{h}\right)\right)dV. \qquad (22)$$

Given that $\dot{\mathbf{R}} = [\dot{t}\ \dot{y}\ \dot{z}]$ and $\vec{h} = [0\ \bar{y}\ \bar{z}]^{\text{T}}$, equation (22) becomes

$$T_{\text{ANCF14}} = \frac{1}{2}\int_V \rho\left(\dot{\vec{r}}^{\text{T}}\dot{\vec{r}} + 2\dot{\vec{r}}^{\text{T}}\dot{\mathbf{R}}\vec{h} + \bar{y}^2\dot{\vec{y}}^{\text{T}}\dot{\vec{y}} + 2\bar{y}\bar{z}\dot{\vec{y}}^{\text{T}}\dot{\vec{z}} + 2\bar{z}^2\dot{\vec{z}}^{\text{T}}\dot{\vec{z}}\right)dV. \qquad (23)$$

As the beam center line passes through the centroid of the cross section 500, applying Equation (9) to Equation (23) results in

$$T_{\text{ANCF14}} = \frac{1}{2}\int_V \rho\left(\dot{\vec{r}}^{\text{T}}\dot{\vec{r}} + \dot{\theta}^2\vec{h}^{\text{T}}\vec{h}\right)dV := T_{\text{translational}} + T_{\text{rotational}}. \qquad (24)$$

In equation (24), the kinetic energy includes translational and rotational terms associated with the center line motion and cross-sectional rotation, respectively, of an ANCF14 beam element. For an ANFC14 beam element with length $l$, uniform cross-sectional area $A$, uniform second polar moment of area $J$, and density p, incorporating equations (14) and (16) into equation (24) gives

$$T_{\text{ANCF14}} = \frac{\rho A}{2}\dot{\vec{q}}^{\text{T}}\left[\int_0^l \mathbf{S}^{\text{T}}\mathbf{S}dx\right]\dot{\vec{q}} + \frac{\rho J}{2}[\dot{\theta}_i\ \ \dot{\theta}_j]\left[\int_0^l \begin{bmatrix}\left(1-\frac{x}{l}\right)^2 & \frac{x}{l}\left(1-\frac{x}{l}\right) \\ \frac{x}{l}\left(1-\frac{x}{l}\right) & \left(\frac{x}{l}\right)^2\end{bmatrix}dx\right]\begin{Bmatrix}\dot{\theta}_i \\ \dot{\theta}_j\end{Bmatrix}$$

$$:= \frac{1}{2}\dot{\vec{q}}^{\text{T}}\mathbf{M}_{\text{ANCF14}}\dot{\vec{q}}, \qquad (25)$$

where $M_{\text{ANCF14}}$ denotes the positive-definite mass matrix of ANCF14:

$$\mathbf{M}_{\text{ANCF14}} = \begin{bmatrix} 156A\mathbf{I}_3 & & & & & \\ 22Al\mathbf{I}_3 & 4Al^2\mathbf{I}_3 & & & sym. & \\ \vec{0}_3^{\text{T}} & \vec{0}_3^{\text{T}} & 140J & & & \\ 54A\mathbf{I}_3 & 13Al\mathbf{I}_3 & 0 & 156A\mathbf{I}_3 & & \\ -13Al\mathbf{I}_3 & -3Al^2\mathbf{I}_3 & 0 & -22Al\mathbf{I}_3 & 4Al^2\mathbf{I}_3 & \\ \vec{0}_3^{\text{T}} & \vec{0}_3^{\text{T}} & 70J & \vec{0}_3^{\text{T}} & \vec{0}_3^{\text{T}} & 140J \end{bmatrix}. \qquad (26)$$

As there are no time-dependent terms in equation (26), the mass matrix of the ANCF14 beam element is constant and only needs to be computed once at the beginning of a simulation. If the multibody system includes only joints and beams discretized by ANCF14 beam elements, equation (20) simplifies to

$$\mathbf{M}\ddot{\vec{q}} + \frac{\partial U}{\partial\vec{q}} + \frac{\partial\vec{g}^{\text{T}}}{\partial\vec{q}}\vec{\lambda} = 0$$

$$\vec{g} = 0, \qquad (27)$$

where M is the mass matrix of the entire multibody system.

The potential energy of an ANCF14 beam element is due to gravity and elastic deformations of the beam element:

$$U_{\text{ANCF}14} := U_{gravity} + U_{elastic}. \tag{28}$$

The gravity potential energy $U_{gravity}$ in equation (28) is the same as that of conventional ANCF-based beam elements:

$$U_{\text{gravity}} = -\int_V \rho \, \vec{r}^{\text{T}} \vec{v} dV = -\int_V \rho (\mathbf{S}\vec{q})^{\text{T}} \vec{v} dV, \tag{29}$$

where $\bar{v}$ is the gravity vector. The virtual work of gravity for an ANCF14 beam element is therefore

$$\frac{\partial U_{\text{gravity}}}{\partial \vec{q}} = -\int_V \rho \mathbf{S}^{\text{T}} \vec{v} dV = -\frac{1}{12} \rho A l \begin{bmatrix} 6\mathbf{I}_3 & l\mathbf{I}_3 & \vec{0}_3 & 6\mathbf{I}_3 & -l\mathbf{I}_3 & \vec{0}_3 \end{bmatrix}^{\text{T}} \vec{v}. \tag{30}$$

In the general case of large deformations, the elastic energy $U_{elastic}$ in equation (28) can be formulated, using the second Piola-Kirchhoff stress tensor σ and the Green-Lagrange strain tensor E, as:

$$U_{\text{elastic}} = \frac{1}{2} \int_V \sigma : \mathbf{E} dV = 1/2 \int_V \mathbf{CE} : \mathbf{E} dV, \tag{31}$$

where C is the fourth-order stiffness tensor. For ANCF14 beam elements, elastic energy $U_{elastic}$ can be simplified as follows. In terms of the deformation gradient tensor F, the tensor E is given by

$$\mathbf{E} = \frac{1}{2}(\mathbf{F}^{\text{T}}\mathbf{F} - \mathbf{I}). \tag{32}$$

Given the material frame $R = [\bar{t} \, \bar{y} \, \bar{z}]$ and considering equation (14), the deformation gradient tensor F for a point P (e.g.. the point 504) on the cross section 500 of the ANCF14 beam element is

$$\mathbf{F}(x, \bar{y}, \bar{z}) = \begin{bmatrix} \dfrac{\partial \vec{r}_{\text{P}}}{\partial x} & \dfrac{\partial \vec{r}_{\text{P}}}{\partial \bar{y}} & \dfrac{\partial \vec{r}_{\text{P}}}{\partial \bar{z}} \end{bmatrix}$$

$$= \begin{bmatrix} \dfrac{\partial \vec{r}}{\partial x} + \left(\dfrac{\partial \mathbf{R}}{\partial x}\right)\vec{h} & \mathbf{R}\left(\dfrac{\partial \vec{h}}{\partial \bar{y}}\right) & \mathbf{R}\left(\dfrac{\partial \vec{h}}{\partial \bar{z}}\right) \end{bmatrix} = \begin{bmatrix} \partial \vec{r}' + \mathbf{R}'\vec{h} & \vec{y} & \vec{z} \end{bmatrix}, \tag{33}$$

where $x$ is the distance of the cross section 500 along the center line from Node $i$. Left-multiplying the deformation gradient tensor F by the transpose of the material frame 512, $R^{\text{T}}$, and subtracting the identity matrix I gives a tensor D that provides a measure of deformation of the ANCF14 beam element:

$$\mathbf{D}(x, \bar{y}, \bar{z}) = \mathbf{R}^{\text{T}}\mathbf{F} - \mathbf{I} := \begin{bmatrix} \vec{d}_1 & \vec{d}_2 & \vec{d}_3 \end{bmatrix}$$

$$= \begin{bmatrix} \mathbf{R}^{\text{T}}(\vec{r}' + \mathbf{R}'\vec{h}) - \vec{X} & \vec{0}_3 & \vec{0}_3 \end{bmatrix} = \begin{bmatrix} \mathbf{R}^{\text{T}}(\vec{r}' - \vec{t}) + \mathbf{R}^{\text{T}}\mathbf{R}'\vec{h} & \vec{0}_3 & \vec{0}_3 \end{bmatrix}, \tag{34}$$

where $\vec{X} := [1 \, 0 \, 0]^{\text{T}}$. The second and third columns of D correspond to the deformation of the cross section 500 along the $\vec{y}$ and $\vec{z}$ axes of the material frame 512. Setting $\vec{d}_2 = \vec{d}_3 = \vec{0}_3$ implies that the cross section 500 remains orthogonal to the center line 502 and rotates rigidly about the center line 502, complying with Euler-Bernoulli beam theory. Given that $\vec{h} = [0 \, \bar{y} \, \bar{z}]^{\text{T}}$ and employing equation (11), the $\vec{d}_1$ term in equation (34) can be re-formulated as

$$\vec{d}_1 = \mathbf{R}^{\mathrm{T}}(\vec{r}' - \vec{t}) + \mathbf{R}^{\mathrm{T}}\mathbf{R}'\vec{h} = \left\{ \begin{array}{c} \|r'\| - 1 \\ 0 \\ 0 \end{array} \right\} + \left\{ \begin{array}{c} \gamma_1\bar{y} + \gamma_2\bar{z} \\ \tau_m\bar{z} \\ -\tau_m\bar{y} \end{array} \right\}. \tag{35}$$

In equation (35), the first part of $\vec{d}_1$ describes longitudinal deformations and the second part characterizes transverse and torsional deformations. Utilizing the derived tensor D, the Green-Lagrange strain becomes

$$\mathbf{E} = \frac{1}{2}(\mathbf{F}^{\mathrm{T}}\mathbf{F} - \mathbf{I}) = \frac{1}{2}(\mathbf{D} + \mathbf{D}^{\mathrm{T}} + \mathbf{D}^{\mathrm{T}}\mathbf{D}). \tag{36}$$

In addition, putting equations (34) and (35) into equation (36) gives

$$\mathbf{E} := \begin{bmatrix} \epsilon_{11} & \epsilon_{12} & \epsilon_{13} \\ \epsilon_{12} & 0 & 0 \\ \epsilon_{13} & 0 & 0 \end{bmatrix}$$

$$\epsilon_{11} = \frac{1}{2}((\|\vec{r}'\| - 1 + \gamma_1\bar{y} + \gamma_2\bar{z})^2 + \tau_m^2\bar{y}^2 + \tau_m^2\bar{z}^2 + 2(\|\vec{r}'\| - 1 + \gamma_1\bar{y} + \gamma_2\bar{z})) \tag{37}$$

$$\epsilon_{12} = \frac{1}{2}\tau_m\bar{z}, \ \epsilon_{13} = -\frac{1}{2}\tau_m\bar{y}.$$

The expression for $\varepsilon_{11}$ in equation (37) suggests a coupling between the longitudinal, transverse (bending), and torsional deformations. Such a coupling arises from the quadratic term $D^{\mathrm{T}}D$ in equation (36). It should be understood that if the deformations are small and within the linear elastic regime, the $\varepsilon_{11}$ term in equation (37) can be neglected and simplified as $\epsilon_{11}^{\mathrm{small}}$:

$$\epsilon_{11}^{\mathrm{small}} = \|\vec{r}'\| - 1 + \gamma_1\bar{y} + \gamma_2\bar{z}, \tag{38}$$

which results in

$$\epsilon_{11} = \epsilon_{11}^{\mathrm{small}} + \frac{1}{2}\left(\left(\epsilon_{11}^{\mathrm{small}}\right)^2 + \tau_m^2(\bar{y}^2 + \bar{z}^2)\right). \tag{39}$$

Putting equation (39) into the elastic energy $U_{elastic}$ of equation (31), the total elastic energy of an ANCF14 beam element is:

$$U_{\mathrm{elastic}} = \frac{1}{2}\int_V E\epsilon_{11}^2 + 4G\epsilon_{12}^2 + 4G\epsilon_{13}^2 dV, \tag{40}$$

where E is the Young's modulus and G denotes the shear modulus. Provided the following conditions for the cross section 500: (i) the cross section 500 is uniform along the ANCF14 beam element, (ii) the origin of the material frame 512 coincides with the centroid of the material frame 412, and (iii) the $\vec{y}$ and $\vec{z}$ axes are symmetry axes the material frame 512, the elastic energy for small strains reduces to:

$$U_{\mathrm{elastic}}|_{\mathrm{small}} = \frac{EA}{2}\int_0^l (\|\vec{r}'\| - 1)^2 dx + \frac{EI_z}{2}\int_0^l \gamma_1^2 dx + \frac{EI_y}{2}\int_0^l \gamma_2^2 dx + \frac{GJ_t}{2}\int_0^l \tau_m^2 dx, \tag{41}$$

where $I_y$ and $I_z$ are the second moments of area of the cross section 500 about the $\vec{y}$ and $\vec{z}$ axes of the material frame 512, and $J_t$ is the torsional constant of the cross section 500 of the ANCF14 beam element. Under the same conditions used to derive equation (41), and assuming the fourth moments of area

$$\int_A \bar{y}^4 dA \approx 0, \ \int_A \bar{z}^4 dA \approx 0, \ \int_A \bar{y}^2 \bar{z}^2 dA \approx 0, \tag{42}$$

the elastic potential energy for the general case of large deformations of ANCF14 beam elements becomes:

$$U_{\text{elastic}} = \frac{EA}{8} \int_0^l (\|\vec{r}'\|^2 - 1)^2 dx$$

$$+ \frac{EI_z}{4} \int_0^l \gamma_1^2 (3\|\vec{r}'\|^2 - 1) dx \tag{43}$$

$$+ \frac{EI_y}{4} \int_0^l \gamma_2^2 (3\|\vec{r}'\|^2 - 1) dx$$

$$+ \frac{GJ_t}{2} \int_0^l \tau_m^2 dx + \frac{EJ}{4} \int_0^l \tau_m^2 (\|\vec{r}'\|^2 - 1) dx.$$

Equation (43) shows that in simulations with large deformations, the longitudinal, transverse, and torsional deformations are strongly coupled.

The virtual work of elastic energy is the derivative of the elastic energy with respect to the state variables of the ANCF14 beam element. Employing equations (42) and (43) gives:

$$\frac{\partial U_{\text{elastic}}}{\partial \vec{q}} = \int_V \left( E\epsilon_{11} \frac{\partial \epsilon_{11}}{\partial \vec{q}} + 4G\epsilon_{12} \frac{\partial \epsilon_{12}}{\partial \vec{q}} + 4G\epsilon_{13} \frac{\partial \epsilon_{13}}{\partial \vec{q}} \right) dV$$

$$= E \int_V \epsilon_{11} \left( (1 + \epsilon_{11}^{\text{small}}) \frac{\partial \epsilon_{11}^{\text{small}}}{\partial \vec{q}} + \tau_m (\bar{y}^2 + \bar{z}^2) \frac{\partial \tau_m}{\partial \vec{q}} \right) dV \tag{44}$$

$$+ G \int_V \left( \tau_m (\bar{y}^2 + \bar{z}^2) \frac{\partial \tau_m}{\partial \vec{q}} \right) dV.$$

Further, based on equation (38),

$$\frac{\partial \epsilon_{11}^{\text{small}}}{\partial \vec{q}} = \frac{1}{\|\vec{r}'\|} \vec{r}'^{\text{T}} \frac{\partial \vec{r}'}{\partial \vec{q}} + \bar{y} \frac{\partial \gamma_1}{\partial \vec{q}} + \bar{z} \frac{\partial \gamma_2}{\partial \vec{q}}, \tag{45}$$

and, using the same assumptions made for equation (41), equation (44) for small strains reduces to

$$\left. \frac{\partial U_{\text{elastic}}}{\partial \vec{q}} \right|_{\text{small}} = E \int_V \left( \epsilon_{11}^{\text{small}} \frac{\partial \epsilon_{11}^{\text{small}}}{\partial \vec{q}} \right) dV + G \int_V \left( \tau_m (\bar{y}^2 + \bar{z}^2) \frac{\partial \tau_m}{\partial \vec{q}} \right) dV$$

$$= EA \int_0^l \left[ \left( 1 - \frac{1}{\|\vec{r}'\|} \right) \vec{r}'^{\text{T}} \frac{\partial \vec{r}'}{\partial \vec{q}} \right] dx + GJ_t \int_0^l \tau_m \frac{\partial \tau_m}{\partial \vec{q}} dx + EI_z \int_0^l \gamma_1 \frac{\partial \gamma_1}{\partial \vec{q}} dx + EI_y \int_0^l \gamma_2 \frac{\partial \gamma_2}{\partial \vec{q}} dx. \tag{46}$$

14

The elastic potential energy of equation (43) can be calculated in a similar manner. In some embodiments, numerical integration techniques (e.g., Gaussian quadrature) can be used to compute equations (44) and (46). To do so, however,

$$\frac{\partial \gamma_1}{\partial \vec{q}}, \frac{\partial \gamma_2}{\partial \vec{q}}, \text{ and } \frac{\partial \tau_m}{\partial \vec{q}}$$ at the integration points are required. Such a numerical integration can be performed using the definition of the material frame 512 described above. Then, once the virtual work of elastic energies is known, an appropriate time-stepping technique (e.g., the Runge-Kutta, geometric variational integrators, or Newmark technique) can be used to solve the equations of motion in equation (27).

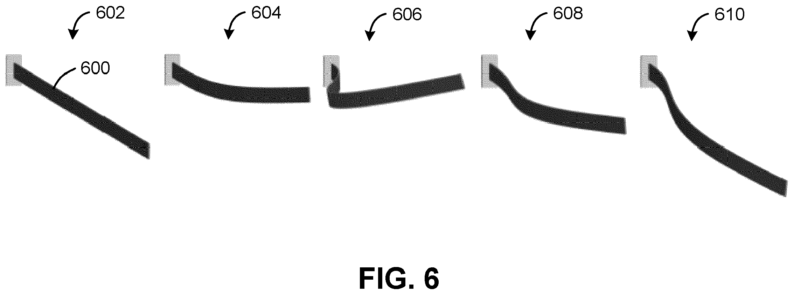

Figure 6 illustrates exemplar renderings of a simulated torsion-deformable beam element during a simulation, according to various embodiments. As shown, an ANCF14 beam element 600 has been simulated in a lateral torsional buckling test, and the simulation results rendered as renderings 602-610. During or after a simulation, the design application 130 can render one or more representations of the updated states of a system that includes torsion-deformable beam element(s) for display to a user via a graphical user interface provided by the design application 130. Although exemplar renderings 602-610 are shown for illustrative purposes, any technically feasible representations of updated systems can be rendered in embodiments to help users visualize and/or understand the results of simulations.

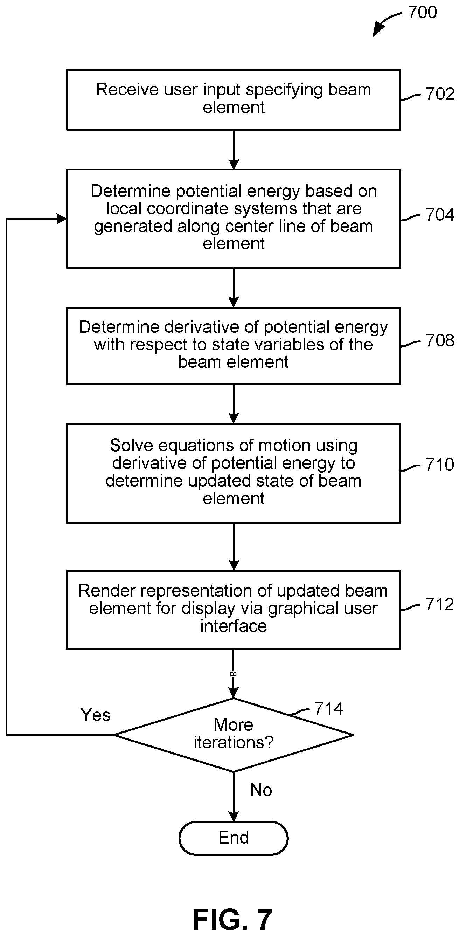

Figure 7 is a flow diagram of method steps for simulating a beam element that includes one or more locations that are not curved during simulation, according to various embodiments. Although the method steps are described with reference to the system of Figure 1, persons skilled in the art will understand that any system configured to implement the method steps, in any order, falls within the scope of the present invention.

As shown, a method 700 begins at step 702, where the design application 130 receives user input specifying a beam element. In some embodiments, a user specifies beam element(s) of a system via a graphical user interface provided by the design application 130. Although described with respect to one beam element for simplicity, the user may also specify a system including multiple beam elements and joints between the beam elements, in which case the design application 130 can generate local coordinate systems along those beam elements that are used to determine the derivatives of potential energies for each of the beam elements with respect to state variables of those beam elements, which can then be used to solve equations of motions to determine the updated state of a system that includes the beam elements.

At step 704, the design application 130 determines a potential energy based on local coordinate systems that are generated along a center line of the beam element. In some embodiments, the design application 130 computes the potential energy according to equation (28) and, while computing the potential energy, the design application 130 also generates local coordinate systems at multiple points along the center line of the beam element. In particular, the design application 130 can generate local coordinate systems that are Bishop frame coordinate systems. As described, such local coordinate systems can be used to measure torsion and bending deformations during a simulation, because a potential energy and the derivative of the potential energy with respect to state variables of the beam element are functions of local coordinate frames. In some embodiments, the design application 130 can perform a numerical integration technique, such as the Gauss quadrature technique, to obtain the potential energy by integrating the potential energy along the beam element. Local coordinate systems may also be used during such a numeral integration, such as at the quadrature points of the Gauss quadrature technique.

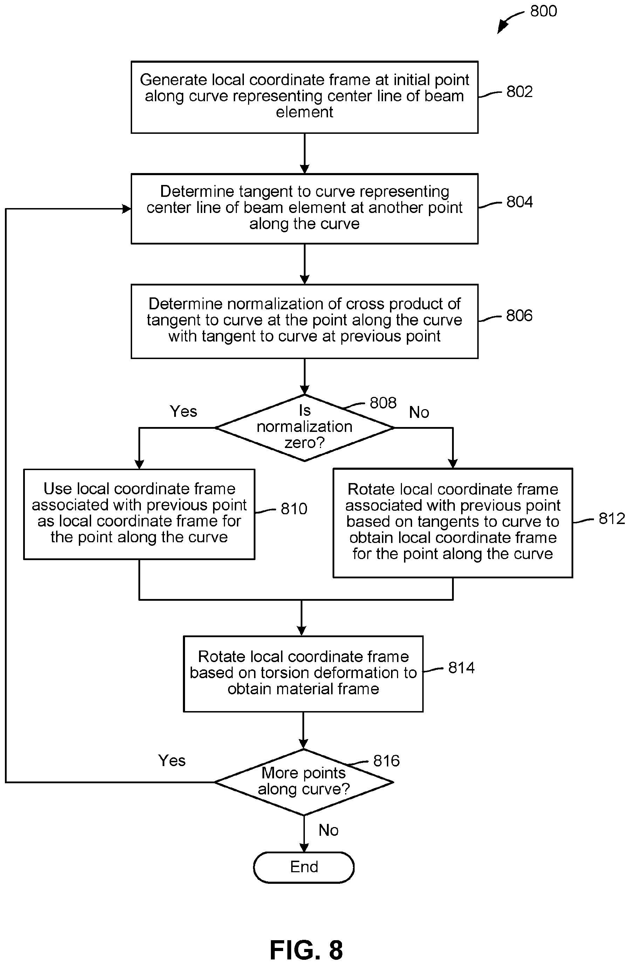

As described, interpolation may be used to generate the local coordinate frames between nodes of a beam element in some embodiments. Figure 8 is a flow diagram of method steps for generating local coordinate frames along a spatial curve associated with a beam element while determining the potential energy at step 704, according to various embodiments. Although the method steps are described with reference to the system of Figure 1, persons skilled in the art will understand that any system configured to implement the method steps, in any order, falls within the scope of the present invention.

As shown, a method 800 begins at step 802, where the design application 130 generates the local coordinate frame at an initial point along a curve representing a center line of a beam element. In some embodiments, the design application 130 computes the local coordinate frame at the initial point by finding a unique solution to equation (5), subject to initial conditions at the initial point, as described above in conjunction with Figure 4.

At step 804, the design application 130 determines a tangent to the curve representing the center line of the beam element at another point along the curve.

At step 806, the design application 130 determines a normalization of a cross product of the tangent to the curve at the point with a tangent to the curve at a previous point along the curve. The previous point along the curve can be the initial point or a subsequent point along the curve.

At step 808, the design application 130 determines whether the normalization of the cross product is equal to zero. The normalization of the cross product being equal to zero implies that the tangent to the curve at the point along the curve is the same as the tangent to the curve at the previous point.

If the normalization of the cross product is equal to zero, then at step 810, the design application 130 uses a local coordinate frame associated with the previous point as a local coordinate frame for the point along the curve.

On the other hand, if the normalization of the cross product is not equal to zero, then at step 812, the design application 130 rotates the local coordinate frame associated with the previous point based on the tangents to the curve to obtain the local coordinate frame for the point along the curve. As described above in conjunction with Algorithm 1, in some embodiments, the design application 130 rotates the local coordinate frame based on the tangent to the curve at the point along the curve and the tangent to the curve at the previous point. In particular, the local coordinate frame can be rotate to align the tangent to the curve at the point along the curve with the tangent to the curve at the previous point.

At step 814, the design application 130 further rotates the local coordinate frame, determined at steps 810 or 812, based on a torsion deformation to obtain the material frame, which is used as the local coordinate frame. In some embodiment, the rotational angle for the torsion deformation is $\theta(x)$, described above in conjunction with Figure 5.

At step 816, if there are more points along the curve, then the method 800 returns to step 804, where the design application 130 determines a tangent to the curve representing the center line of the beam element at another point along the curve. As described, better approximations of the local Bishop frame can be obtained by using more points along the curve.

Returning to Figure 7, at step 706, the design application 130 determines a derivative of the potential energy with respect to state variables of the beam element. Then, at step 708, the design application 130 solves equations of motion using the derivative of the potential energy with respect to the state variables to determine an updated state of the beam element. In some embodiments, the design application 130 solves the equations of motion given by equation (27).

At step 710, the design application 130 renders a representation of the updated beam element for display via a graphical user interface provided by the design application 130. Any technically feasible representation of the updated beam element may be rendered in some embodiments, such as representations that are similar to the renderings 602-610 shown in Figure 6, representations that use colors or other graphical elements to indicate various properties (e.g.. stress, deformation, etc.) along the updated beam element, etc.

At step 712, if additional iterations are required, then the method 700 returns to step 704, where the design application 130 again determines a potential energy based on local coordinate systems that are generated along the updated beam element. As described, some simulations, such as dynamic simulations in which the beam changes over time or static simulations involving large deformations, may require a time stepping technique, such as the Runge-Kutta, geometric variational integrators, or Newmark techniques, in which multiple iterations of steps 704-710 are performed to update the potential energy and derivative of the potential energy that are used to solve the equations of motion and determine an updated state of the beam element, at each time step. Further, renderings representing one or more of the updated beam elements can be generated and displayed via a graphical user interface provided by the design application 130. The difference between such dynamic simulations and static simulations involving large deformations is that time evolves during the dynamic simulations whereas state variables evolve during the static simulations. In other simulations, such as static simulations involving small deformations, multiple iterations may not be required.

In sum, techniques are disclosed for designing structures using a torsion-deformable spatial beam element. The beam element can be represented using the absolute nodal coordinate formulation, or any other technically feasible formulation. At each of one or more time steps, the Bishop frame is used to generate local coordinate systems along a center line of the beam element, which are then used to compute a potential energy of the beam element with respect to state variables of the beam element. Thereafter, a derivative of the potential energy is plugged into equations of motion that are solved to determine an updated state of the beam element. A representation of the updated beam element can also be rendered and displayed via a graphical user interface. During simulation, the beam element can undergo various deformations, including longitudinal deformation, bending deformation, and torsion deformation.

One technical advantage of the disclosed techniques relative to the prior art is that computer-aided design applications can more accurately simulate and render beam elements having locations with zero curvature. In addition, the disclosed techniques require fewer degrees of freedom to represent a beam element relative to various conventional techniques, thereby reducing the overall computational costs of simulation by a computer-aided design application. These technical advantages represent one or more technological advancements over prior art approaches.

1. In some embodiments, a computer-implemented method for designing a system that includes one or more beam elements comprises receiving, via a graphical user interface, user input specifying a beam element included in a system, determining a potential energy for the system based on a plurality of local coordinate systems that are generated at corresponding points along a center line of the beam element, wherein each local coordinate system included in the plurality of local coordinate systems comprises a Bishop frame, performing one or more computer simulation operations based on one or more equations of motion and a derivative of the potential energy to generate an updated system, and rendering at least one representation of the updated system for display via the graphical user interface.

2. The method of clause 1, wherein generating each local coordinate system of one or more of the local coordinate systems included in the plurality of local coordinate systems comprises determining a tangent to the center line at the corresponding point, determining a normalization of a cross-product of the tangent to the center line at the corresponding point and a tangent to the center line at a previous point, and if the normalization of the cross product is zero, selecting a local coordinate frame associated with the previous point as the local coordinate system at the corresponding point, or if the normalization of the cross product is non-zero, generating the local coordinate system by rotating the local coordinate frame associated with the previous point based on the tangent to the center line at the corresponding point and the tangent to the center line at the previous point.

3. The method of clauses 1 or 2, further comprising rotating the local coordinate frame based on a torsion deformation.

4. The method of any of clauses 1-3, wherein generating each local coordinate system of one or more of the local coordinate systems included in the plurality of local coordinate systems comprises performing one of a rotation technique, a double reflection technique, or a numerical integration technique.

5. The method of any of clauses 1-4, wherein the beam element is represented using an absolute nodal coordinate formulation.

6. The method of any of clauses 1-5, wherein the beam element is represented as two or more nodes, and wherein each node included in the two or more nodes has seven degrees of freedom.

7. The method of any of clauses 1-6, wherein the beam element is represented using one of a floating frame of reference formulation, an incremental finite element formulation, or a large rotation vector formulation.

8. The method of any of clauses 1-7, further comprising determining another potential energy for the updated system based on another plurality of local coordinate systems that are generated at corresponding points along a center line of the beam element in the updated system, wherein each local coordinate system included in the other plurality of local coordinate systems comprises a Bishop frame, and performing one or more computer simulation operations based on the one or more equations of motion and a derivative of the other potential energy to generate another updated system.

9. The method of any of clauses 1-8, wherein the beam element includes at least one location that has no curvature.

10. The method of any of clauses 1-9, wherein the system represents one of an architectural structure, a robot, a wind turbine, or a suspension system.

11. In some embodiments, one or more non-transitory computer-readable storage media include instructions that, when executed by at least one processor, cause the at least one processor to performing steps for simulating a system comprising a beam element, the steps comprising receiving, via a graphical user interface, user input specifying a beam element included in a system, determining a potential energy for the system based on a plurality of local coordinate systems that are generated at corresponding points along a center line of the beam element, wherein each local coordinate system included in the plurality of local coordinate systems comprises a Bishop frame, performing one or more computer simulation operations based on one or more equations of motion and a derivative of the potential energy to generate an updated system, and rendering at least one representation of the updated system for display via the graphical user interface.

12. The one or more non-transitory computer-readable storage media of clause 11, wherein generating each local coordinate system of one or more of the local coordinate systems included in the plurality of local coordinate systems comprises determining a tangent to the center line at the corresponding point, determining a normalization of a cross-product of the tangent to the center line at the corresponding point and a tangent to the center line at a previous point, and if the normalization of the cross product is zero, selecting a local coordinate frame associated with the previous point as the local coordinate system at the corresponding point, or if the normalization of the cross product is non-zero, generating the local coordinate system by rotating the local coordinate frame associated with the previous point based on the tangent to the center line at the corresponding point and the tangent to the center line at the previous point.

13. The one or more non-transitory computer-readable storage media of clauses 11 or 12, wherein simulating the system comprises performing a dynamic simulation over a plurality of time steps.

14. The one or more non-transitory computer-readable storage media of any of clauses 11-13, wherein simulating the system comprises performing one of a Runge-Kutta technique, a geometric variational integrators technique, or a Newmark technique.

15. The one or more non-transitory computer-readable storage media of any of clauses 11-14, wherein simulating the system comprises performing a static simulation at a single point in time.

16. The one or more non-transitory computer-readable storage media of any of clauses 11-15, wherein the beam element is represented using an absolute nodal coordinate formulation.

17. The one or more non-transitory computer-readable storage media of any of clauses 11-16, wherein the beam element is represented as two or more nodes, and wherein each node included in the two or more nodes has seven degrees of freedom.

18. The one or more non-transitory computer-readable storage media of any of clauses 11-17, wherein the beam element comprises at least one location having zero curvature.

19. The one or more non-transitory computer-readable storage media of any of clauses 11-18, wherein the system represents one of an architectural structure, a robot, a wind turbine, or a suspension system.

20. In some embodiments, a system comprises one or more memories storing instructions, and one or more processors that are coupled to the one or more memories and, when executing the instructions, are configured to receive, via a graphical user interface, user input specifying a beam element included in a system, determine a potential energy for the system based on a plurality of local coordinate systems that are generated at corresponding points along a center line of the beam element, wherein each local coordinate system included in the plurality of local coordinate systems comprises a Bishop frame, perform one or more computer simulation operations based on one or more equations of motion and a derivative of the potential energy to generate an updated system, and render at least one representation of the updated system for display via the graphical user interface.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.
Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.
Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.
Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.
The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

1. A computer-implemented method for designing a system that includes one or more beam elements, the method comprising:

   receiving, via a graphical user interface, user input specifying a beam element included in a system;
   determining a potential energy for the system based on a plurality of local coordinate systems that are generated at corresponding points along a center line of the beam element, wherein each local coordinate system included in the plurality of local coordinate systems comprises a Bishop frame;
   performing one or more computer simulation operations based on one or more equations of motion and a derivative of the potential energy to generate an updated system; and
   rendering at least one representation of the updated system for display via the graphical user interface.

2. The method of claim 1, wherein generating each local coordinate system of one or more of the local coordinate systems included in the plurality of local coordinate systems comprises:

   determining a tangent to the center line at the corresponding point;
   determining a normalization of a cross-product of the tangent to the center line at the corresponding point and a tangent to the center line at a previous point; and
   if the normalization of the cross product is zero, selecting a local coordinate frame associated with the previous point as the local coordinate system at the corresponding point, or
   if the normalization of the cross product is non-zero, generating the local coordinate system by rotating the local coordinate frame associated with the previous point based on the tangent to the center line at the corresponding point and the tangent to the center line at the previous point.

3. The method of claim 2, further comprising rotating the local coordinate frame based on a torsion deformation.

4. The method of any of claims 1-3, wherein generating each local coordinate system of one or more of the local coordinate systems included in the plurality of local coordinate systems comprises performing one of a rotation technique, a double reflection technique, or a numerical integration technique.

5. The method of any of claims 1-4, wherein the beam element is represented using an absolute nodal coordinate formulation.

6. The method of claim 5, wherein the beam element is represented as two or more nodes, and wherein each node included in the two or more nodes has seven degrees of freedom.

7. The method of any of claims 1-4, wherein the beam element is represented using one of a floating frame of reference formulation, an incremental finite element formulation, or a large rotation vector formulation.

8. The method of any of claims 1-7, further comprising:

   determining another potential energy for the updated system based on another plurality of local coordinate systems that are generated at corresponding points along a center line of the beam element in the updated system, wherein each local coordinate system included in the other plurality of local coordinate systems comprises a Bishop frame; and

performing one or more computer simulation operations based on the one or more equations of motion and a derivative of the other potential energy to generate another updated system.

9. The method of any of claims 1-8, wherein the beam element includes at least one location that has no curvature.

10. The method of any of claims 1-9, wherein the system represents one of an architectural structure, a robot, a wind turbine, or a suspension system.

11. One or more non-transitory computer-readable storage media including instructions that, when executed by at least one processor, cause the at least one processor to perform the method of any of claims 1-10.

12. A system comprising:

one or more memories storing instructions; and
one or more processors that are coupled to the one or more memories and, when executing the instructions, are configured to perform the method of any of claims 1-10.

100

System Memory   104

Design Application 130

Operating System 132

CPU
102

Memory
Bridge
105

Parallel Processing
Subsystem
112

Display
Device
110

Input Devices
108

System Disk
114

I/O Bridge
107

Add-In Card
120

Switch
116

Add-In Card
121

Network
Adapter
118

**FIG. 1**

**FIG. 2**

EP 3 968 204 A1

**FIG. 3**

EP 3 968 204 A1

**FIG. 4**

A

B

C

**FIG. 5**

**FIG. 6**

700

| Receive user input specifying beam element | 702 |

↓

| Determine potential energy based on local coordinate systems that are generated along center line of beam element | 704 |

↓

| Determine derivative of potential energy with respect to state variables of the beam element | 708 |

↓

| Solve equations of motion using derivative of potential energy to determine updated state of beam element | 710 |

↓

| Render representation of updated beam element for display via graphical user interface | 712 |

↓

Yes ← ◇ More iterations? 714

No ↓

( End )

**FIG. 7**

800

```
┌─────────────────────────────────────┐
│ Generate local coordinate frame at   │
│ initial point along curve            │──── 802
│ representing center line of beam      │
│ element                               │
└─────────────────────────────────────┘
                  │
                  ▼
┌─────────────────────────────────────┐
│ Determine tangent to curve           │
│ representing center line of beam      │──── 804
│ element at another point along        │
│ the curve                             │
└─────────────────────────────────────┘
                  │
                  ▼
┌─────────────────────────────────────┐
│ Determine normalization of cross      │
│ product of tangent to curve at the    │──── 806
│ point along the curve with tangent    │
│ to curve at previous point            │
└─────────────────────────────────────┘
```

Is normalization zero? — 808

Yes          No

┌─────────────────────────────────┐   ┌─────────────────────────────────┐
│ Use local coordinate frame       │   │ Rotate local coordinate frame    │
│ associated with previous point    │   │ associated with previous point    │
│ as local coordinate frame for ─810│   │ based on tangents to curve to ─812│
│ the point along the curve         │   │ obtain local coordinate frame    │
│                                   │   │ for the point along the curve    │
└─────────────────────────────────┘   └─────────────────────────────────┘

┌─────────────────────────────────┐
│ Rotate local coordinate frame    │
│ based on torsion deformation to ─814│
│ obtain material frame            │
└─────────────────────────────────┘

Yes          More points along curve? — 816

No

End

**FIG. 8**

## EUROPEAN SEARCH REPORT

**Application Number**

**EP 21 19 5597**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOO WAN-SUK ET AL: "A New Thin Spatial Beam Element Using the Absolute Nodal Coordinates: Application to a Rotating Strip #", MECHANICS BASED DESIGN OF STRUCTURES AND MACHINES, [Online] vol. 33, no. 3-4, 1 July 2005 (2005-07-01) , pages 399-422, XP055884767, ISSN: 1539-7734, DOI: 10.1080/15367730500458267 Retrieved from the Internet: URL:https://www.tandfonline.com/doi/pdf/10 .1080/15367730500458267?needAccess=true> [retrieved on 2022-01-28] * the whole document * * page 401, last paragraph – page 404, paragraph 2 * * figure 2 * * page 409, last paragraph – page 410, paragraph 2 * ----- | 1-12 | INV. G06F30/23 G06F30/10 ADD. G06F111/10 G06F119/14 |
| X | DMITROCHENKO O N ET AL: "Generalization of Plate Finite Elements for Absolute Nodal Coordinate Formulation", MULTIBODY SYSTEM DYNAMICS, KLUWER ACADEMIC PUBLISHERS, DO, vol. 10, no. 1, 1 August 2003 (2003-08-01) , pages 17-43, XP019259147, ISSN: 1573-272X * the whole document * * page 19, paragraph 1 – page 22, paragraph 1 * * page 24, last paragraph – page 26, last paragraph * * figure 7 * * figure 5 * * page 37, paragraph 2 – page 38, paragraph 3 * ----- -/-- | 1-12 | TECHNICAL FIELDS SEARCHED (IPC) G06F |

The present search report has been drawn up for all claims

| Place of search | Date of completion of the search | Examiner |
|---|---|---|
| Munich | 28 January 2022 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**page 1 of 2**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SKRINJAR LUKA ET AL: "Absolute Nodal Coordinate Formulation in a Pre-Stressed Large-Displacements Dynamical System", STROJNISKI VESTNIK – JOURNAL OF MECHANICAL ENGINEERING, [Online] vol. 63, no. 7-8, 1 January 2017 (2017-01-01), pages 417-8, XP055884762, SI ISSN: 0039-2480, DOI: 10.5545/sv-jme.2017.4561 Retrieved from the Internet: URL:https://www.sv-jme.eu/?ns_articles_pdf =/ns_articles/files/ojs/4561/public/4561-2 3976-1-PB.pdf&id=3391> [retrieved on 2022-01-28] * the whole document * * page 418, column 1, paragraph 1 – page 419, column 1, paragraph 1 * * page 419, column 2, last paragraph – page 420, column 2, paragraph 3 * ----- | 1-12 | |
| | | | TECHNICAL FIELDS SEARCHED (IPC) |

The present search report has been drawn up for all claims

| Place of search | Date of completion of the search | Examiner |
|---|---|---|
| Munich | 28 January 2022 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63077332